# EUROPEAN PATENT SPECIFICATION

(11) **EP 1 760 274 B1**
(45) Date of publication and mention of the grant of the patent: **13.01.2016**
(21) Application number: 06113017.5
(22) Date of filing: 24.04.2006
(51) Int. Cl.: F01K 13/02, F01D 25/12, F01D 17/10

(54) **A turbine plant provided with a steam bleed and a system for cooling a turbine section arranged downstream of such steam bleed**
Turbinenanlage mit Dampfablass und eine stromabwärts des Dampfablasses angeordnete Kühlvorrichtung einer Turbinenstufe
Installation de turbine avec soutirage de vapeur et système de refroidissement situé en aval dudit soutirage de vapeur

(30) Priority: 27.04.2005 IT TO20050281
(43) Date of publication of application: 07.03.2007
(73) Proprietor: ANSALDO ENERGIA S.P.A., 16152 Genova (IT)
(72) Inventor: Cagliani, Flavio, 16129, Genova (IT); Raggi, Francesco, 16137, Genova (IT)
(74) Representative: Bergadano, Mirko

(56) References cited:
- WO-A-94/19584
- WO-A-98/13588
- DE-A1- 19 640 298
- DE-C1- 19 823 251
- US-A- 6 094 914

## Description

The present invention relates to a turbine plant provided with a steam bleed, and a system for cooling a turbine section arranged downstream of such steam bleed.

A process for cooling a steam turbine in ventilation operation is disclosed in DE 19640298 A1.

In particular, the present invention relates to a co-generation plant, in which a steam flow can be drawn by means of a steam bleed valve controlled according to the requests of users, defined for example by a district heating plant.

In the running condition requiring all steam in the plant to be sent to users, the turbine section arranged downstream of the steam bleed valve is completely "empty" of steam and, therefore, is subjected to excessive heating, caused by the ventilating effect; due to such heating, the temperature within such turbine section may even exceed the resistance limits of the materials with which it is made.

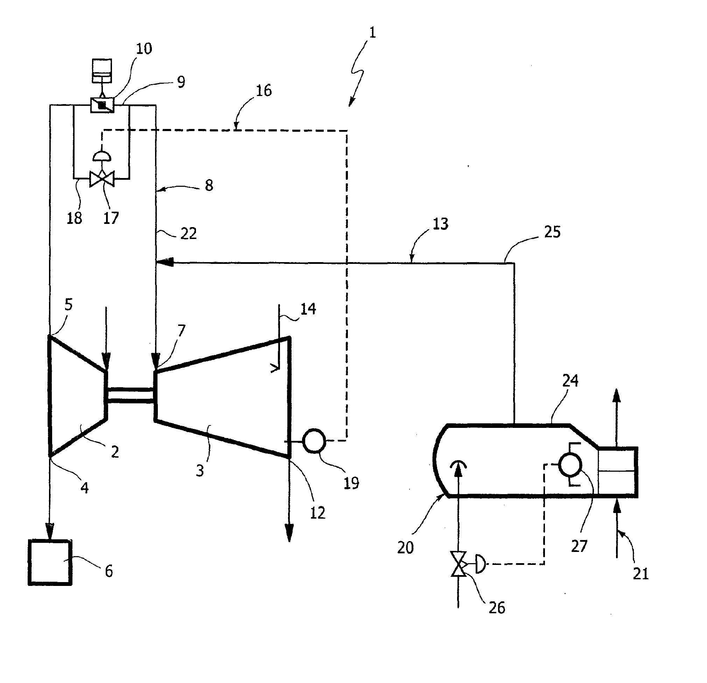

To avoid excessive heating, the currently known cooling methods are:
- to spray water (generally condensate drawn downstream of the condenser) into the discharge zone of the aforesaid turbine section;
- to let a flow of cooling steam through, towards the turbine section to be cooled, by adjusting the opening/closing of the drawing valve.

If all the steam is required by users for long periods of time, the known methods illustrated above have some drawbacks.

In particular, the operation of the sprayers mentioned above for long periods of time causes an unacceptable risk of erosion of the low pressure section blades, while the flow of cooling steam let through to the turbine section to be cooled downstream of the steam bleed valve does not produce electrical power and decreases the thermal power available to users, generating a significant decrease in the global efficiency of the plant.

Furthermore, the steam bleed valve is generally of the "throttle" type, and therefore it is practically impossible to finely and precisely adjust opening/closing to optimise the flow rate of steam towards the turbine section to be cooled and to thus minimise the aforesaid decrease of efficiency.

It is the object of the present invention to make a turbine plant provided with a steam bleed and a system for cooling a turbine section arranged downstream of such draw, which allows to simply and cost-effectively solve the problems illustrated above.

According to the present invention, it is made a turbine plant as defined in claim 1.

For a better understanding of the present invention, it will now be described a preferred embodiment only by way of non-limitative example, and with reference to the diagram that is shown in the accompanying drawing, which partially shows a turbine plant provided with a steam bleed, and a system for cooling a turbine section arranged downstream of such draw, according to the present invention.

In the attached figure, it is indicated as a whole by 1 a turbine plant (partially and schematically shown) of the co-generation type, i.e. for the generation of electrical energy and of heat at the same time. The turbines of plant 1 actuate an electrical energy generator (not shown) and are divided into a high pressure section (not shown), a medium pressure section 1 and a low pressure section 3.

Section 2 has two outlets 4 and 5, of which outlet 4 communicates with a user 6 (schematically shown) to send steam, for example for remote heating, while outlet 5 communicates with an inlet 7 of section 3 through a connection line or tube 8 (commonly called "crossover"). An intermediate segment 9 of the line 8 has a steam bleed valve 10, which is of the throttle type and which is adjusted according to the request of user 6 so as to open/close the segment 9 itself: when segment 9 is closed by valve 10, the counter pressure at outlet 5 makes the steam exit from section 2 through outlet 4, while when segment 9 is open, the steam flows from outlet 5 towards section 3.

Section 3 has an outlet 12 communicating with a condenser (not shown) and is adapted to be cooled by a system 13 in the event of excessive heating due to ventilation effect, in particular when the steam from the section 2 is completely sent to user 6.

System 13 constitutes part of the plant 1 and comprises a spraying device 14 for spraying, in the discharge zone of section 3, a certain amount of cooling condensate (from a line arranged downstream of an extraction pump of the condenser).

System 13 further comprises a device 16 for letting a certain amount of steam leak out along line 8 from outlet 5 towards inlet 7. Device 16 comprises a regulation or integration valve 17, which is distinct from valve 10, is arranged along line 8 on a bypass segment 18 parallel to segment 9 and is controlled according to a signal output by a temperature sensor 19, for example a thermocouple, constituting part of the device 16 and adapted to detect the temperature at the penultimate stage of the section 3. In use, the temperature increases in such stage, valve 17 progressively opens segment 18 so as to let through an optimal flow of cooling steam towards inlet 7.

System 13 further comprises a circuit 20 which exploits the heat generated by a cooling circuit 21 of closed circuit auxiliary units (not shown) to generate cooling steam and introduce such steam into a segment 22 of line 8 between valve 10 and inlet 7. Cooling circuit 21 uses closed circuit water as heat exchange fluid and cools various components of plant 1, such as alternator, turbine oil system, pumps, air compressors, sampling system, etc. The heat subtracted from circuit 21 to the auxiliary components, also if characterised by a relatively low temperature instead of being dissipated in the environment, is used by circuit 20 to heat a flow rate of water by means of an exchanger 24, having an outlet which communicates with segment 22 by means of a conduit 25. In particularly, exchanger 24 is of the so-called "shell & tube" type, i.e. comprising a tube bundle in which hot water from circuit 21 flows, and a shell which is fed with water from the condenser of plant 1. A valve 26 draws in input for regulating the quantity of water in the casing of the exchanger 24 according to the signal output by a level sensor 27 carried within the exchanger 24 itself.

The pressure and flow of steam produced in the exchanger 24 are not regulated and therefore are determined by the vacuum in the segment 22. The generation of steam in circuit 20 is possible also with the relatively low temperature of the heat provided by circuit 21 in exchanger 24, thanks to the very high vacuum found in the condenser, and therefore in segment 22 when valve 10 is closed.

The cooling water temperature in circuit 21 is controlled in a way not shown and not described in detail, so as to always have an appropriate thermal gradient in the exchanger 24 for generating steam in conduit 25, and so as to optimise cooling of the aforesaid auxiliary components.

Circuit 20 is then provided with accessory devices, such as for example a condensate discharge device and a non-return valve (not shown) along conduit 25.

In use, as explained above, when there is vacuum in segment 22 due to the closing of valve 10, the heat contributed by exchanger 24 in circuit 20 is sufficient to generate steam, which flows in segment 22 to cool section 3. If the cooling steam produced in circuit 20 is not sufficient to cool section 3, the signal output by sensor 19 tends to open valve 17 to integrate with the steam from section 2, bypassing valve 10, whose adjustment depends only on the request of user 6.

From the above, it is apparent that system 13 allows to minimise the consumption of cooling steam from section 2.

Indeed, circuit 20 allows to limit, or even eliminate the flow of cooling steam drawn from section 3 and, at the same time, avoid the dispersion into the environment of heat produced in the circuit 21. In other words, circuit 20 avoids or at least minimises the consumption of steam in section 2 for cooling, so as to use it for user 6 with consequent increase of the overall efficiency of the plant 1.

On the other hand, if the action of circuit 20 is insufficient, valve 17 being distinct from valve 10, allows to fine-tune the passage of cooling steam from section 2 to section 3, thus further optimising the efficiency of plant 1.

Furthermore, system 13 avoid or limits the intervention of spraying device 14, with consequent increase of the erosion risks of materials in section 3, particularly in the last stage of the blading.

It is then apparent that system 13 is extremely simple and does not require complex modifications in the event of overhauling existing running plants.

Finally, from the above, it is apparent that changes and variations can be applied to the described plant 1 without departing from the scope of protection of the present invention.

In particular, the water entering the casing of exchanger 24 and which is transformed into steam could come from a different source from the condenser of plant 1.

## Claims

1. A turbine steam plant (1) comprising:
- a first and a second turbine sections (2, 3);
- a connection line (8) between an outlet (5) of said first turbine section (2) and an inlet (7) of said second turbine section (3);
- a steam bleed valve (10) arranged along said connection line (8) and regulated to send steam to a user (6);
- a closed cycle cooling circuit (21) for auxiliary members;
- cooling means (13) of said second turbine section (3) to avoid excessive heating due to ventilating effect; said cooling means (13) comprising first cooling means (16) to let through a first flow of cooling steam from said outlet (5) of the first turbine section (2) to said inlet (7) of the second turbine section (3);
**characterised in that**:
- said cooling means (13) comprise second cooling means (20) to generate a second flow of cooling steam by heating water using heat provided by said closed cycle circuit (21); and
- said first cooling means (16) comprise a regulation valve (17) distinct from said steam bleed valve (10).

2. A plant according to claim 1, **characterised in that** said water in said second cooling means (20) is defined by condensate of a condenser of the plant (1).

3. A plant according to claim 1 or 2, **characterised in that** said regulation valve (17) is arranged in parallel to said steam bleed valve (10).

4. A plant according to claim 3, **characterised in that** said regulation valve (17) is arranged in a bypass segment (18) of said connection line (8).

5. A plant according to any of the preceding claims, **characterised in that** said second cooling means (20) comprise a heat exchanger (24) to draw heat from said closed circuit (21) and a feeding line (25) of said second flow of cooling steam from said exchanger (24) in a segment (22) of said connection line (8) upstream of said second turbine section (3).

6. A plant according to claim 5, **characterised in that** said second cooling means (20) comprise level adjusting means (26,27) to adjust the level of said water in said exchanger (24).

## Patentansprüche

1. Turbinen-Dampfkraftanlage (1), die Folgendes umfasst:
einen ersten und einen zweiten Turbinenabschnitt (2, 3);
eine Verbindungsleitung (8) zwischen einem Auslass (5) des ersten Turbinenabschnitts (2) und einem Einlass (7) des zweiten Turbinenabschnitts;
ein Dampfablassventil (10), das entlang der Verbindungsleitung (8) angeordnet ist und reguliert wird, um Dampf an einen Verbraucher (6) zu senden;
einen geschlossenen Kühlkreislauf (21) für Hilfselemente;
Kühlmittel (13) des zweiten Turbinenabschnitts (3), um aufgrund des Lüftungseffekts eine übermäßige Erwärmung zu vermeiden; wobei die Kühlmittel (13) erste Kühlmittel (16) umfassen, um einen ersten Kühldampfstrom von dem Auslass (5) des ersten Turbinenabschnitts zu dem Einlass (7) des zweiten Turbinenabschnitts (3) durchzulassen;
**dadurch gekennzeichnet, dass**:
die Kühlmittel (13) zweite Kühlmittel (20) umfassen, um durch Erwärmen von Wasser unter Verwendung von Wärme, die von dem geschlossenen Kreislauf (21) bereitgestellt wird, einen zweiten Kühldampfstrom zu erzeugen; und
die ersten Kühlmittel (16) ein Regulierventil (17) umfassen, das von dem Dampfablassventil (10) verschieden ist.

2. Anlage nach Anspruch 1, **dadurch gekennzeichnet, dass** das Wasser in den zweiten Kühlmitteln (20) durch das Kondensat eines Dampfkondensators der Anlage (1) definiert ist.

3. Anlage nach Anspruch 1 oder 2, **dadurch gekennzeichnet, dass** das Regulierventil (17) parallel zu dem Dampfablassventil (10) angeordnet ist.

4. Anlage nach Anspruch 3, **dadurch gekennzeichnet, dass** das Regulierventil (17) in einem Bypass-Segment (18) der Verbindungsleitung (8) angeordnet ist.

5. Anlage nach einem der vorhergehenden Ansprüche, **dadurch gekennzeichnet, dass** die zweiten Kühlmittel (20) einen Wärmetauscher (24), um dem geschlossenen Kreislauf (21) Wärme zu entziehen, und eine Zuführleitung (25) für den zweiten Kühldampfstrom von dem Tauscher (24) in ein Segment (22) der Verbindungsleitung (8), das sich vor dem zweiten Turbinenabschnitt (3) befindet, umfasst.

6. Anlage nach Anspruch 5, **dadurch gekennzeichnet, dass** die zweiten Kühlmittel (20) Pegeleinstellmittel (26, 27) umfassen, um den Wasserstand in dem Tauscher (24) einzustellen.

## Revendications

1. Installation de turbine à vapeur (1) comprenant :
- une première et une seconde section de turbine (2, 3) ;
- une conduite de liaison (8) entre une sortie (5) de ladite première section de turbine (2) et une entrée (7) de ladite seconde section de turbine (3) ;
- une soupape de purge de vapeur (10) agencée le long de ladite conduite de liaison (8) et réglée pour envoyer de la vapeur à un utilisateur (6) ;
- un circuit de refroidissement à cycle fermé (21) pour des éléments auxiliaires ;
- des moyens de refroidissement (13) de ladite seconde section de turbine (3) pour éviter un chauffage excessif dû à un effet de ventilation ; lesdits moyens de refroidissement (13) comprenant des premiers moyens de refroidissement (16) pour laisser passer un premier écoulement de vapeur de refroidissement de ladite sortie (5) de la première section de turbine (2) vers ladite entrée (7) de la seconde section de turbine (3) ;
**caractérisée en ce que** :
- lesdits moyens de refroidissement (13) comprennent des seconds moyens de refroidissement (20) pour générer un second écoulement de vapeur de refroidissement en chauffant de l'eau au moyen de chaleur fournie par ledit circuit à cycle fermé (21) ; et
- lesdits premiers moyens de refroidissement (16) comprennent une soupape de régulation (17) distincte de ladite soupape de purge de vapeur (10).

2. Installation selon la revendication 1, **caractérisée en ce que** ladite eau dans lesdits seconds moyens de refroidissement (20) est définie par condensat d'un condensateur de l'installation (1).

3. Installation selon la revendication 1 ou 2, **caractérisée en ce que** ladite soupape de régulation (17) est agencée en parallèle à ladite soupape de purge de vapeur (10).

4. Installation selon la revendication 3, **caractérisée en ce que** ladite soupape de régulation (17) est agencée dans un segment de dérivation (18) de ladite conduite de liaison (8).

5. Installation selon l'une quelconque des revendications précédentes, **caractérisée en ce que** lesdits seconds moyens de refroidissement (20) comprennent un échangeur de chaleur (24) pour prendre de la chaleur dudit circuit fermé (21) et une conduite d'alimentation (25) dudit second écoulement de vapeur de refroidissement à partir dudit échangeur (24) dans un segment (22) de ladite conduite de liaison (8) en amont de ladite seconde section de turbine (3).

6. Installation selon la revendication 5, **caractérisée en ce que** lesdits seconds moyens de refroidissement (20) comprennent des moyens d'ajustement de niveau (26, 27) pour ajuster le niveau de ladite eau dans ledit échangeur (24).
